# EUROPEAN PATENT SPECIFICATION

(11) **EP 0 597 581 B1**
(45) Date of publication and mention of the grant of the patent: **08.01.1997**
(21) Application number: 93307627.5
(22) Date of filing: 27.09.1993
(51) Int. Cl.: B60K 15/077

(54) **A fuel tank sender assembly**
Kraftstofftank-Senderanordnung
Assemblage d'émetteur de reservoir de carburant

(30) Priority: 12.11.1992 GB 9223768
(43) Date of publication of application: 18.05.1994
(73) Proprietor: FORD MOTOR COMPANY LIMITED, Brentwood, Essex CM13 3BW (GB); FORD FRANCE S. A., 92506 Rueil-Malmaison Cédex (FR); FORD-WERKE AKTIENGESELLSCHAFT, 50735 Köln (DE)
(72) Inventor: Banse, Permjit Singh, Billericay, Essex (GB)
(74) Representative: Messulam, Alec Moses

(56) References cited:
- PATENT ABSTRACTS OF JAPAN vol. 9, no. 303 (M-434)(2026) 30 November 1985 & JP-A-60 139 528 (NISSAN JIDOSHA K.K.) 24 July 1985
- PATENT ABSTRACTS OF JAPAN vol. 10, no. 301 (M-525)(2357) 14 October 1986 & JP-A-61 113 519 (NISSAN MOTOR CO. LTD.) 31 May 1986

## Description

This invention relates to a fuel tank sender assembly for a motor vehicle fuel tank.

Fuel tank sender assemblies are conventionally mounted in their respective fuel tanks through an opening in an upper wall of the tank. The sender assembly however has to indicate the volume of fuel remaining in the tank at any time and it is therefore important that the assembly should be correctly positioned relative to the floor of the tank. Fuel tanks do tend to flex in use, depending on the volume of fuel contained, and on the internal pressure which varies with external ambient conditions.

It is known to use a so-called bottom referencing mechanism which ensures that at least the part of the assembly which follows the level of the fuel is always in contact with the floor of the fuel tank. For example, JP-A-61 113 519 describes a bottom referencing mechanism in which a fixed bracket guides a movable bracket supporting a fuel level gauge.

According to the present invention, there is provided a fuel tank sender assembly for a motor vehicle fuel tank, the assembly comprising a first bracket to be mounted to a top wall of the tank, a second bracket mounted on the first bracket for vertical slideable movement relative to the first bracket, the second bracket being biased, in use, against the bottom wall of the fuel tank when the first bracket is mounted to the top wall of the tank, and a fuel sender mechanism mounted on the second bracket, wherein both first and second brackets are made from pressed metal parts characterised in that the second bracket is guided for slideable movement relative to the first bracket by guide lugs pressed out from the metal of the first bracket.

The use of relatively slideable pressed metal parts allows for production of a low cost but effective bottom sensing mechanism which is not affected by the fuel in which it is immersed. The second bracket preferably includes a tongue which can be deformed after the two brackets have been fitted together, to limit the slideable movement between the two brackets. The tongue preferably engages against a pressed-out stop lug on the first bracket.

A separate tension spring may be mounted between the first and second brackets to provide the biasing force.

The second bracket may have a plastics foot to abut against the bottom wall of the fuel tank.

The fuel sender mechanism is preferably mounted on an arm of the second bracket which is formed from the same piece of metal as the remainder of the first bracket.

The second bracket preferably has a top hat cross-section, with the outer flanges of the section being guided in guide lugs on the first bracket.

The invention will now be further described, by way of example, with reference to the accompanying drawings, in which:
Figure 1 is a schematic view of a section through a fuel tank incorporating a sender assembly in accordance with the invention;
Figure 2 is a perspective view of the sender assembly of the invention;
Figure 3 is a section through the assembly of Figure 2 on the lines III-III; and
Figure 4 is a detail of an upper part of the assembly with the spring partly broken away.

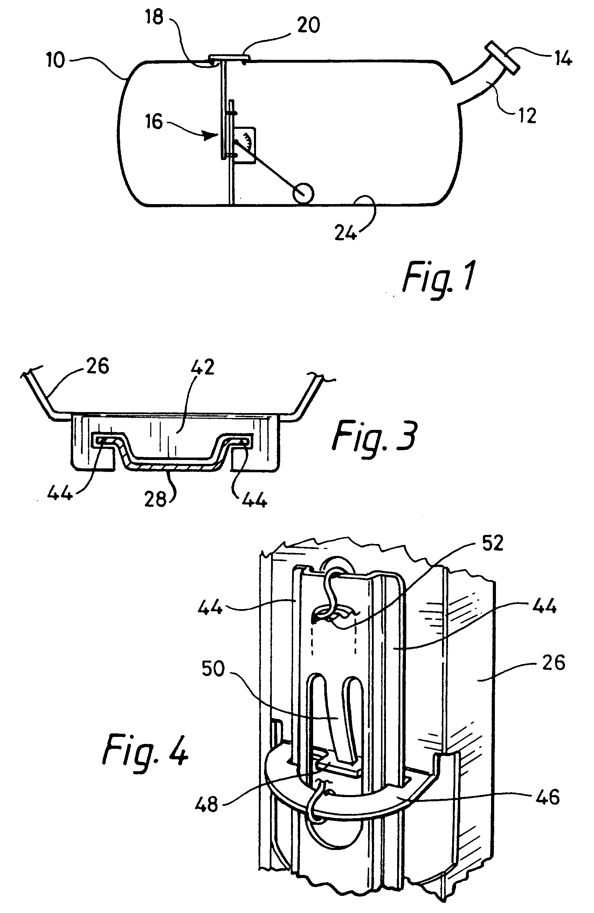

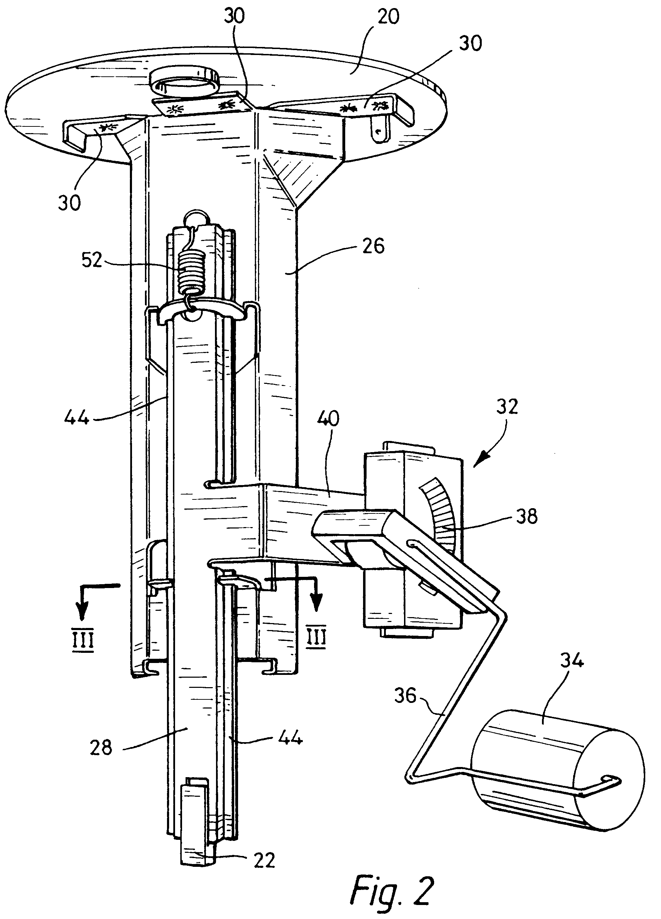

Figure 1 shows a fuel tank 10 which may be moulded of plastics such as a high density polyethylene, or may be of pressed steel or any other material. The tank includes a filler neck 12 with a cap 14. A sender assembly 16 is mounted inside the tank and is inserted into the tank through an aperture 18 in the top wall of the tank. A closure plate 20 closes the aperture 18 when the sender assembly is in place. The dimensions of the sender assembly are related to the depth of the tank such that when the cover plate 20 is in position over the opening 18, then a foot 22 (see Figure 2) of the sender assembly is in contact with the tank bottom wall 24.

The sender assembly shown in Figure 2 comprises a first bracket 26 and a second bracket 28. The first bracket is formed from a single piece of sheet metal which is formed to the shape shown, with upper flanges 30 welded to the underside of the cover plate 20. The first bracket 26 therefore hangs from the underside of the cover plate.

The second bracket 28 is vertically slideable relative to the first bracket 26 and carries a fuel level sender mechanism 32. The mechanism 32 has a float 34 at the end of a float arm 36, and a contact on the float arm travels over a resistor card 38 in a manner known per se. The sender mechanism 32 is carried on a side am 40 of the second bracket 28.

Like the first bracket, the second bracket 28 is formed from a single sheet of metal suitably formed. As can be seen in Figure 3 the second bracket 28 has a generally top hat section and, toward the bottom of the first bracket, this section is guided in a guide lug 42 pressed-out from the metal of the first bracket 26. In fact it is the outer flanges 44 of the bracket 28 which are guided in corresponding tracks formed on the first bracket.

Figure 4 shows an upper guide bracket 46 which is also pressed-out of the bracket 26. The upper guide lug 46 also incorporates a stop lug 48, which is again part of the first bracket, and the second bracket 28 has a deformable tongue 50 which is bent inwards once the two brackets have been assembled together, to limit the downward movement of the second bracket 28 relative to the first bracket 26.

A spring 52 however biases the second bracket 28 in a downward direction. This spring hooks over the top of the first bracket and over the upper guide bracket 46, as shown.

In use, when the sender assembly is positioned in the tank 10 the foot 22 will first make contact with the bottom wall 24 of the tank, and as the closure plate 20 is brought into position to cover the opening 18, the first bracket 26 will be pushed down into the tank and will move downwards relative to the bracket 28 which is restrained by its contact with the bottom wall 24. The spring 52 will therefore extend and will provide a permanent biasing force which will keep the foot 22 of the bracket 28 in permanent contact with the bottom wall 24 of the tank, even though the spacing between the top and bottom wall may vary depending on the weight of fuel in the tank, the internal pressure in the tank and other factors. Because the second bracket will follow the position of the bottom of the tank in this way, the sender mechanism 32 will always provide an output representative of the volume of fuel referred to the bottom of the tank.

The use of simple metal pressings in this way provides a low cost but effective mechanism for bottom referencing the sender.

## Claims

1. A fuel tank sender assembly (16) for a motor vehicle fuel tank, the assembly comprising a first bracket (26) to be mounted to a top wall of the tank, a second bracket (28) mounted on the first bracket for vertical slideable movement relative to the first bracket, the second bracket being biased, in use, against the bottom wall of the fuel tank when the first bracket is mounted to the top wall of the tank, and a fuel sender mechanism (32) mounted on the second bracket, wherein both first and second brackets (26,28) are made from pressed metal parts characterised in that the second bracket is guided for slideable movement relative to the first bracket by guide lugs (42,46) pressed out from the metal of the first bracket (26)

2. A fuel tank sender assembly as claimed in Claim 1, wherein the second bracket (28) includes a tongue (50) which can be deformed after the two brackets (26,28) have been fitted together, to limit the slideable movement between the two brackets.

3. A fuel tank sender assembly as claimed in Claim 2, wherein the tongue (50) engages against a pressed-out stop lug (48) on the first bracket (26)

4. A fuel tank sender assembly as claimed in any preceding claim, wherein a separate tension spring (52) is mounted between the first and second brackets (26,28) to provide the biasing force.

5. A fuel tank sender assembly as claimed in any preceding claim, wherein the second bracket (28) has a plastics foot (22) to abut against the bottom wall of the fuel tank.

6. A fuel tank sender assembly as claimed in any preceding claim, wherein the fuel sender mechanism (32) is mounted on an arm (40) of the second bracket which is formed from the same piece of metal as the remainder of the second bracket (28).

7. A fuel tank sender assembly as claimed in any preceding claim, wherein the second bracket (28) has a top hat cross-section, with the outer flanges of the section being guided in guide lugs (42,46) on the first bracket (26)

## Patentansprüche

1. Kraftstofftank-Gebereinheit (16) für einen Kraftstofftank in einem Kraftfahrzeug, welche Gebereinheit eine an der oberen Tankwand zu befestigende erste Lasche (26) aufweist, eine in bezug auf die erste Lasche gleitend vertikal verschiebbar an der ersten Lasche anzubringende zweite Lasche (28), wobei die zweite Lasche im Einsatz in Richtung auf die Bodenwand des Tanks vorgespannt ist, wenn die erste Lasche an der oberen Wand des Tanks angebracht ist, sowie einen Kraftstoffpegel-Gebermechanismus (32), welcher an der zweiten Lasche befestigt ist, worin sowohl die erste als auch die zweite Lasche (26, 28) aus Preßblechteilen hergestellt sind, dadurch gekennzeichnet, daß die zweite Lasche zur Führung der Verschiebebewegung gegenüber der ersten Lasche über aus dem Metall der ersten Lasche (26) ausgestellte Führungsösen (42, 46) geführt ist.

2. Kraftstofftank-Gebereinheit nach Anspruch 1, in welcher die zweite Lasche (28) eine Zunge (50) aufweist, welche nach dem Zusammenfügen der beiden Laschen (26, 28) verformt werden kann, so daß die Verschiebebewegung zwischen den beiden Laschen begrenzt wird.

3. Kraftstofftank-Gebereinheit nach Anspruch 2, in welcher die Zunge (50) zur Anlage an einem aus der ersten Lasche (26) ausgestellten Anschlaglappen (48) kommt.

4. Kraftstofftank-Gebereinheit nach einem beliebigen der vorangehenden Ansprüche, worin zur Erzeugung der Vorspannkraft eine separate Zugfeder (52) zwischen der ersten und der zweiten Lasche (26, 28) montiert ist.

5. Kraftstofftank-Gebereinheit nach einem beliebigen der vorangehenden Ansprüche, worin die zweite Lasche einen Kunststofffuß (22) zur Anlage an der Bodenwand des Kraftstofftanks aufweist.

6. Kraftstofftank-Gebereinheit nach einem beliebigen der vorangehenden Ansprüche, worin der Kraftstoffpegel-Gebermechanismus (32) an einem Arm (40) der zweiten Lasche angebracht ist, welcher aus demselben Metallteil geformt ist, wie der Rest der zweiten Lasche (28).

7. Kraftstofftank-Gebereinheit nach einem beliebigen der vorangehenden Ansprüche, worin die zweite Lasche (28) einen hutförmigen Querschnitt aufweist, wobei die äußeren Flansche des Querschnitts in Führungsösen (42, 46) an der ersten Lasche (26) geführt werden.

## Revendications

1. Unité émettrice pour réservoir de carburant (16) pour un réservoir de carburant de véhicule à moteur, l'unité comprenant un premier support (26) devant être monté sur une paroi supérieure du réservoir, un second support (28) monté sur le premier support avec faculté de mouvement coulissant vertical par rapport au premier support, le second support étant en fonctionnement, poussé initialement contre la paroi de fond du réservoir de carburant lorsque le premier support est monté sur la paroi supérieure du réservoir, et un mécanisme émetteur du niveau de carburant (32) monté sur le second support, dans laquelle les premier et second supports (26, 28) sont fabriqués à partir de pièces en métal estampées, caracterisée en ce que le second support est guidé pour pouvoir coulisser par rapport au premier support par des projections de guidage (42, 46) estampées à partir du métal du premier support (26).

2. Unité émettrice de réservoir de durant selon la revendication 1, dans laquelle le second support (28) inclut une languette (50) qui peut être déformée après que les deux supports (26, 28) ont été fixés ensemble, afin de limiter le mouvement coulissant entre les deux supports.

3. Unité émettrice de réservoir de carburant selon la revendication 2, dans laquelle la languette (50) s'engage contre une projection d'arrêt estampée (48) sur le premier support (26).

4. Unité émettrice de réservoir de carburant selon l'une des revendications précédentes, dans laquelle un ressort de tension séparé (52) est monté entre les premier et second supports (26, 28) afin de fournir la force de poussée initiale.

5. Unité émettrice de réservoir de carburant selon l'une des revendications précédentes, dans laquelle le second support (28) présente un pied en matière plastique (22) qui vient en butée contre la paroi de fond du réservoir de carburant.

6. Unité émettrice de réservoir de carburant selon l'une des revendications précédentes, dans laquelle le mécanisme émetteur du niveau de carburant (32) est monté sur un bras (40) du second support qui est formé à partir de la même pièce de métal que le reste dusecond support (28).

7. Unité émettrice de réservoir de carburant selon l'une des revendications précédentes, dans laquelle le second support (28) présente une coupe transversale supérieure en chapeau, les brides externes de la section étant guidées dans des projections de guide (42, 46) sur le premier support.
